# FASCICULE DE BREVET EUROPEEN

(11) **EP 1 377 496 B1**
(45) Date de publication et mention de la délivrance du brevet: **24.05.2006**
(21) Numéro de dépôt: 02730349.4
(22) Date de dépôt: 05.04.2002
(51) Int. Cl.: B62M 3/08

(54) **ENSEMBLE D'UNE PEDALE DE BICYCLETTE ET D'UNE CALE D'ACCROCHAGE, PEDALE ET CALE DE CET ENSEMBLE**
VERBINDUNGSSTRUKTUR ZWISCHEN FAHRRADPEDAL UND STOSSPLATTE, FAHRRADPEDAL UND STOSSPLATTE
BICYCLE PEDAL AND FASTENING SHOE ASSEMBLY AND PEDAL AND CLEAT FOR SAME

(30) Priorité: 12.04.2001 FR 0105009
(43) Date de publication de la demande: 07.01.2004
(73) Titulaire: TIME SPORT INTERNATIONAL, 58 640 Varennes-Vauzelles (FR)
(72) Inventeur: PLASSIARD, Alain, F-38140 La Murette (FR); DE BAST, Jean-François, F-38620 Montferrat (FR)
(74) Mandataire: Michardière, Bernard
(86) Numéro de dépôt international: PCT/FR2002/001187
(87) Numéro de publication internationale: WO 2002/083490

(56) Documents cités:
- EP-A- 0 169 080
- EP-A- 0 531 873
- EP-A- 0 826 588
- FR-A- 2 644 130

## Description

L'invention est relative à un ensemble de pédale de bicyclette à fixation de sécurité et de cale d'accrochage prévue pour être fixée sous une semelle de chaussure, ensemble du genre de ceux dans lesquels la pédale comprend un corps monté rotatif sur un axe et, sur au moins une face du corps :
- un plateau au-dessus de l'axe de la pédale ;
- un moyen de butée frontale s'étendant parallèlement à l'axe géométrique de la pédale et situé en arrière de cet axe, propre à coopérer avec une surface de butée frontale de la cale, avec une liberté latérale ;
- un organe de maintien monté mobile sur la pédale, propre à être appliqué par un moyen de rappel élastique contre l'arrière de la cale,
- et un moyen de retenue vers le haut prévu sur la pédale pour coopérer avec un moyen conjugué de la cale,
l'accrochage de la cale à la pédale pouvant s'obtenir par une pression du pied sur le plateau de la pédale, tandis que le décrochage est obtenu par une rotation du pied relativement à la pédale autour d'un point situé en arrière de l'axe géométrique de la pédale.

On connaît d'après EP 0 169 080 un ensemble de pédale de bicyclette et de cale d'accrochage de ce type grâce auquel une liaison efficace est assurée entre la pédale et la chaussure du cycliste tout en garantissant une bonne sécurité. En cas de chute du cycliste, un décrochage automatique de la chaussure peut se produire. En utilisation normale, le cycliste peut aisément libérer son pied par un mouvement de torsion assurant le décrochage de la cale. Le centre de rotation de la cale, et de la chaussure, relativement à la pédale, est situé en arrière de l'axe de rotation de la pédale contre le moyen de butée frontale de cette pédale. Le cycliste bénéficie d'une liberté angulaire du pied sans risque de décrochage ou "déchaussage", ce dernier étant obtenu pour un mouvement de rotation plus important. L'étendue du moyen de butée frontale suivant une direction parallèle à l'axe de la pédale permet de bénéficier en outre d'une liberté latérale.

Bien que l'ensemble connu donne satisfaction, il est souhaitable de faciliter l'opération d'accrochage de la cale à la pédale.

On connaît, d'après EP 0 531 873 un ensemble de pédale bicyclette avec dispositif d'accrochage d'une cale fixée sous la semelle de chaussure, selon lequel le bord arrière du plateau de la pédale est en arc de cercle, centré sur un point situé en avant de l'axe de la pédale pour permettre la rotation de la semelle autour de ce point. La butée frontale est constituée par une partie incurvée qui coopère avec une partie correspondante de la pédale située en avant de l'axe et déterminant le centre de rotation de la semelle. L'angle de décrochage de la chaussure est relativement faible, ce qui n'est pas favorable à une absorption progressive des chocs.

L'invention a pour but , notamment , de fournir un ensemble qui apporte une solution à ce problème tout en conservant les avantages de l'ensemblé précédent.

De préférence, l'invention vise à fournir un ensemble de fixation qui fonctionne correctement même si la semelle de la chaussure est équipée de crampons dont la hauteur est supérieure à celle de la cale de sorte que lorsque le cycliste marche, la semelle appuie sur le sol par les crampons sans que la cale touche le sol.

Selon l'invention, un ensemble de pédale de bicyclette à fixation de sécurité et de cale d'accrochage prévue pour être fixée, sous une semelle de chaussure, du genre défini précédemment, est caractérisé par le fait que:
- le moyen de butée frontale de la pédale et la surface de butée frontale de la cale sont agencés pour glisser l'un contre l'autre suivant une direction perpendiculaire au plateau de la pédale sans accrochage, en particulier vers le haut,
- l'organe de maintien arrière constitue le moyen de retenue vers le haut et est prévu pour accrocher un élément conjugué de la cale ,
- et le corps de pédale comporte, à l'arrière de l'organe de maintien arrière , une zone d'appui pour une semelle de chaussure équipée de la cale.

De préférence, la pédale comporte, en arrière de son axe géométrique , et en arrière du plateau, un dégagement de chaque côté.

Le corps de pédale peut comporter, en arrière du plateau , une branche de prolongement de chaque côté, ayant une hauteur inférieure à celle du corps, et dont la face inférieure est sensiblement au niveau de la partie la plus basse du corps , les branches convergeant vers l'arrière pour se rejoindre et former la zone d'appui arrière , les dégagements étant situés au-dessus des branches.

La zone d'appui arrière peut être constituée par un pavé central de largeur maximale inférieure à la largeur de la pédale. Cette zone d'appui arrière peut être située au niveau du plateau.

Avantageusement, la cale est solidaire en partie haute d'une platine munie vers l'arrière, de chaque côté, d'un crampon, en particulier en matière plastique ou élastomère, chaque crampon pouvant traverser le dégagement correspondant du corps de pédale lors du mouvement de rotation pour le déchaussage. Un organe de butée , en saillie vers le bas et vers l'avant, peut être fixé sous la platine , à l'avant . De préférence les deux crampons arrière et l'organe de butée avant ont des hauteurs suffisantes pour former trois points d'appui sur le sol et maintenir la cale hors de contact avec le sol lorsqu'un cycliste marche avec une' chaussure munie de la cale avec platine

L'organe de maintien arrière peut être constitué par une pièce à section transversale en forme de dièdre dont la concavité est tournée vers l'avant et dont une face forme un crochet, cette pièce étant montée rotative sur une tige parallèle à l'axe de la pédale et étant sollicitée élastiquement en rotation vers l'avant.

En variante, l'organe de maintien arrière est formé par une barrette montée rotative sur une tige parallèle à l'axe de la pédale et sollicitée élastiquement en rotation vers l'avant.

En général, l'organe de maintien présente un bord avant rectiligne parallèle à l'axe de la pédale.

L'élément conjugué de la cale , prévu pour coopérer avec l'organe de maintien, peut être formé par un bec en saillie vers l'arrière , à la partie inférieure de la cale .

Le moyen de butée frontale de la pédale peut comprendre une paroi perpendiculaire au plateau , limitant vers l'avant une échancrure arrière du plateau. La paroi peut être formée par une plaque rapportée en métal plus dur que celui du corps de pédale.

En variante, le moyen de butée frontale de la pédale comprend un fil en métal plus dur que celui du corps de pédale , parallèle à l'axe de la pédale, encastré dans la paroi de manière à affleurer cette paroi.

L'invention est également relative à une pédale de bicyclette à fixation de sécurité présentant les caractéristiques de la pédale d'un ensemble tel que défini précédemment.

L'invention est également relative à une cale d'accrochage présentant les caractéristiques de la cale d'un ensemble tel que défini précédemment.

En particulier, une cale d'accrochage selon l'invention est caractérisée par le fait qu'elle est solidaire d'une platine munie de chaque côté vers l'arrière d'un crampon pour la marche et, vers l'avant, d'un organe de butée en saillie vers le bas et vers l'avant, les crampons et l'organe de butée ayant des hauteurs suffisantes pour former trois points d'appui sur le sol et maintenir la cale hors de contact du sol lorsqu'un cycliste marche avec une chaussure munie de cette cale .

L'invention consiste, mises à part les dispositions exposées ci-dessus, en un certain nombre d'autres dispositions dont il sera plus explicitement question ci-après à propos d' exemples de réalisation décrits en détail avec référence aux dessins ci-annexés, mais qui ne sont nullement limitatifs.

Sur ces dessins :
Fig.1 est une vue en perspective d'une pédale gauche de bicyclette selon l'invention.
Fig.2 est une vue en élévation latérale de la pédale de Fig.1.
Fig.3 est une vue en plan de cette pédale.
Fig.4 est une vue de dessous de la pédale de Fig.1.
Fig.5 montre, semblablement à Fig.2, la pédale sur laquelle est fixée une chaussure, schématiquement représentée par une partie de sa semelle, munie de la cale d'accrochage.
Fig.6 est une coupe suivant la ligne VI-VI de Fig.5, avec partie en extérieur.
Fig.7 est une vue de côté de la cale, de la platine et de l'organe de butée avant.
Fig.8 est une vue en perspective du dessous de la platine avec la cale.
Fig.9 est une coupe longitudinale d'une variante de réalisation de la pédale avec la cale accrochée.
Fig.10 est une vue schématique en plan illustrant la position d'accrochage de la cale et d'une pédale droite.
Fig.11, enfin, illustre semblablement à Fig.10, le décrochage par rotation de la cale relativement à la pédale droite.

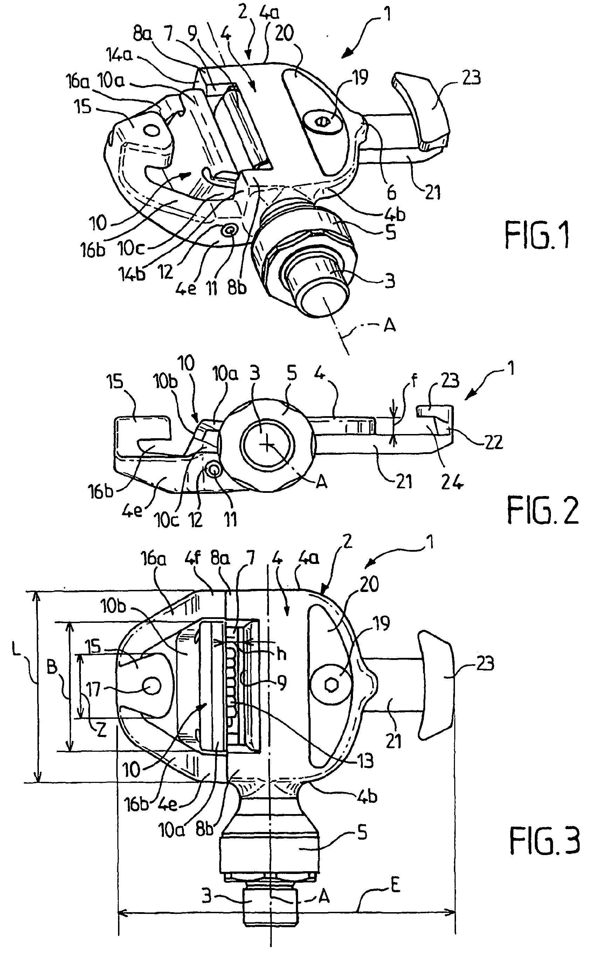

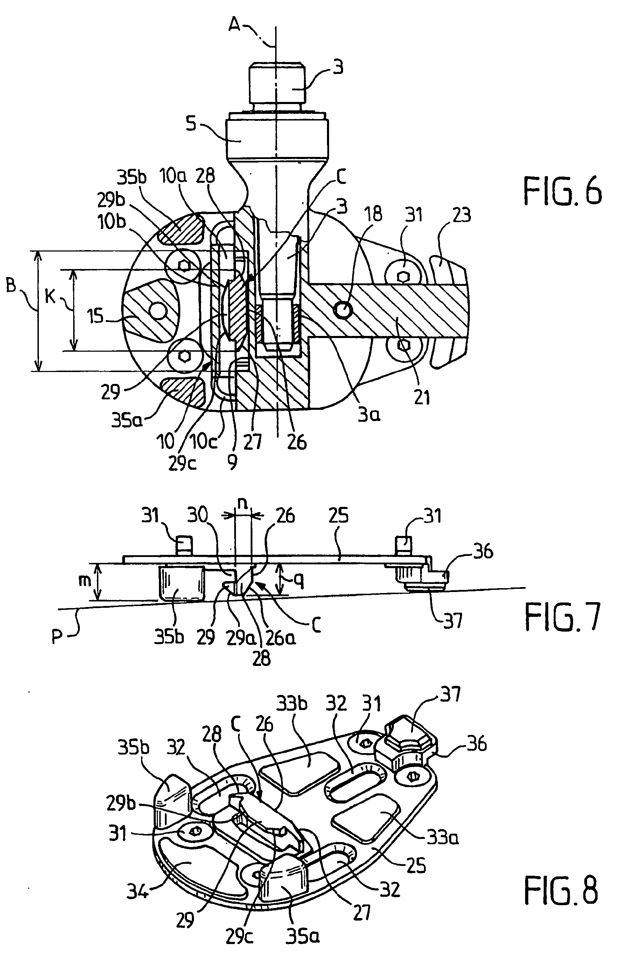

En se reportant aux dessins, notamment à Figs.1 à 6 on peut voir une pédale de bicyclette 1 à fixation de sécurité comprenant un corps de pédale 2 monté rotatif sur un axe 3. L'axe 3 est engagé dans un alésage du corps 2 (voir Fig.6) et un roulement 3a, par exemple à aiguilles, est monté à son extrémité. La pédale représentée sur Figs. 1 à 6 est une pédale gauche, pour fixation sur une manivelle sur la droite.

Dans tout le texte de description et des revendications les termes "avant", "arrière", "dessus", "dessous" , doivent être compris avec référence à une pédale montée sur manivelle de bicyclette, et occupant une position normale de travail sensiblement horizontale. "Avant" correspond au sens de progression de la bicyclette, "arrière" correspond au sens opposé.

Le corps de pédale 2 comprend un plateau 4, sensiblement plan, au-dessus de l'axe 3 de la pédale. Le plateau 4 est limité sur les côtés par un bord extérieur 4a et par un bord intérieur 4b, solidaire d'un moyeu 5 dans lequel est monté un roulement autour de l'axe 3. Le bord avant 4c du plateau a une forme convexe et est muni dans sa partie centrale d'une saillie 6 vers l'avant, arrondie

Le bord arrière du plateau présente une échancrure rectangulaire 7 dont la dimension B parallèlement à l'axe géométrique A est supérieure à la moitié de la largeur L de la pédale (L est égale à la distance entre les bords latéraux 4a et 4b), et de préférence au moins égale à 2L/3. L'échancrure 7 est limitée de chaque côté par un bloc arrière 8a, 8b du plateau , et s'ouvre vers l'arrière.

L'échancrure 7 est limitée vers l'avant par une paroi 9 sensiblement orthogonale au plan supérieur du plateau 4, s'étendant parallèlement à l'axe 3 de la pédale, en arrière de cet axe. La paroi 9 est située au-dessous de la surface supérieure du plateau 4 . Une zone au moins de cette paroi 9 constitue un moyen de butée frontale pour une cale C (Fig.7).

Généralement le corps de pédale 4 est réalisé en un alliage léger, par exemple à base d'aluminium et de magnésium, ou en une résine thermoplastique. La paroi 9, exposée à des frottements et à des efforts, est avantageusement constituée d'une plaque rapportée en un métal plus dur que celui du corps 4, par exemple une plaque d'acier.

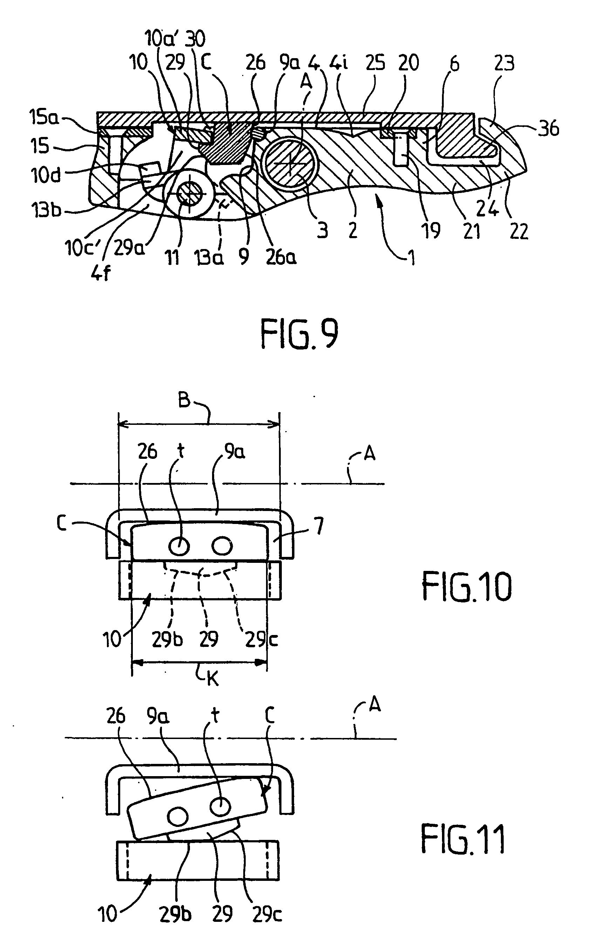

En variante sur Fig.9, le moyen de butée frontale est formé par un fil d'acier à ressort 9a, de section circulaire, encastré dans le bord supérieur de la paroi 9 de telle manière que le fil 9a affleure cette paroi . La butée de la cale C contre le fil 9a a lieu suivant un contact rectiligne parallèle à l'axe A. Comme visible sur Fig. 10, le fil 9a peut présenter un retour vers l'arrière de chaque côté pour former un U encadrant l'échancrure 7.

Un organe de maintien 10 est monté mobile sur le corps de pédale 4, en arrière de la paroi 9.

Selon la réalisation des Figs. 1 à 6, l'organe 10 est constitué par une pièce en forme de dièdre dont l'arête est parallèle à l'axe géométrique A de la pédale. Le bord avant de l'organe 10, qui est le bord avant de la face supérieure 10a, est parallèle à l'axe A et forme un bec en saillie vers l'avant, de même étendue transversale B que l'échancrure 7. La face 10a en position de repos est sensiblement parallèle au plan supérieur du plateau 4, au niveau ou au-dessous de ce plateau. L'autre face 10b du dièdre est inclinée vers l'arrière. Chaque extrémité latérale de la face 10b est solidaire d'une oreille 10c en saillie vers l'avant, orthogonale au plan de la face 10b. Chaque oreille 10c comporte un trou pour le passage d'une tige 11 constituant un axe d'articulation de la pièce 10. La tige 11 est engagée, à chaque extrémité, dans un trou 12, formant palier, prévu dans une branche 4e, 4f de prolongement du corps 2 vers l'arrière. L' espace compris entre les branches 4e, 4f est vide de matière. Les trous 12 sont prévus plus bas que l'axe A relativement au plateau 4.

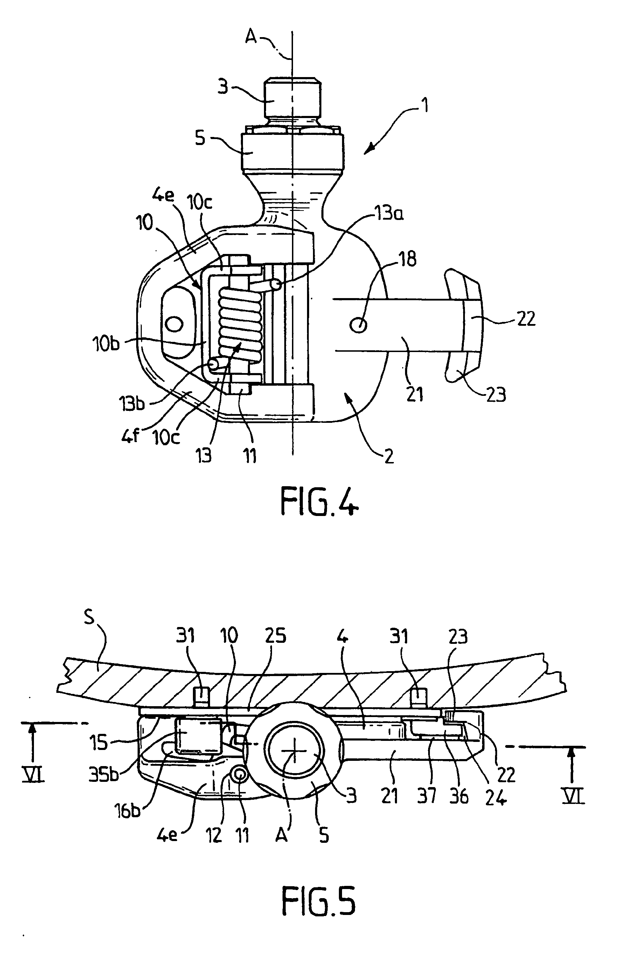

L'organe de maintien 10 est sollicité élastiquement en rotation vers l'avant par un moyen de rappel élastique constitué par un ressort de torsion 13 engagé autour de la tige 11. Une extrémité 13a (Fig.4) du ressort 13 est en appui contre le corps 2 de pédale et l'autre extrémité 13b est en appui contre l'organe 10.

Selon la variante de Fig. 9, l'organe de maintien 10 est constitué par une barrette 10a' correspondant à la seule face 10a du dièdre des Figs. 1 à 6. Le bord avant de l'organe 10, qui est le bord avant de la barrette 10a', est parallèle à l'axe A. Les extrémités latérales de la barrette 10a' sont rabattues à angle droit vers le bas pour former les oreilles 10c' d'articulation sur la tige 11. L'extrémité 13b du ressort 13 est en appui contre une butée 10d solidaire de l'organe 10.

Au repos, l'organe 10 occupe la position illustrée sur Fig.3 dans laquelle le bord avant de l'organe 10 se trouve à une distance h de la paroi 9. Lorsqu'un effort suffisant est exercé vers l'arrière sur l'organe 10, son bord avant peut reculer de sorte que la distance h augmente. Lorsque l'effort cesse, le ressort 13 rappelle l'organe 10 vers l'avant.

La distance h, au repos, est réduite par rapport à la dimension longitudinale E de la pédale. En particulier h est inférieure à E/4 et de préférence inférieure à E/5.

La face inférieure des branches 4e, 4f est sensiblement au niveau de la partie la plus basse du corps de pédale 2. Ces branches 4e, 4f ayant une hauteur inférieure à celle du corps 2 , en particulier sensiblement égale à la moitié de cette hauteur, il en résulte de chaque côté un décrochement 14a, 14b à l'arrière du plateau 4.

L'organe 10 est encadré par le début (perpendiculaire à la paroi 9) des branches 4e, 4f, qui se poursuivent en convergeant vers l'arrière suivant un V, pour se rejoindre en remontant et former une zone d'appui 15 située au niveau du plateau 4. Dans l'exemple des Figs. 1 à 6 , là zone d'appui 15 est formée par une sorte de pavé central sensiblement en forme de trapèze isocèle avec une grande base convexe située en avant. La largeur maximale Z de la zone d'appui 15 est inférieure à la largeur L de la pédale, de préférence inférieure ou égale à la moitié de la largeur L (Z ≤ L/2).

De part et d'autre du pavé 15 existent, dans le corps de pédale, des dégagements 16a, 16b formés par des espaces libres situés au-dessus des parties arrière des branches 4e, 4f.

Le pavé 15 peut être recouvert d'une tôle mince 15a (Fig. 9) en un métal, notamment en acier, plus dur que la matière du corps 2 et résistant mieux à l'usure. Le pavé 15 comporte un trou 17 pour la fixation de cette tôle, par vis ou par rivet par exemple. De même un trou 18 est prévu à l'avant du plateau 4, au centre, pour la fixation, par exemple par une ou des vis 19 (Fig.3), d'une tôle mince 20, sensiblement en forme de segment circulaire, en un métal plus dur que la matière du corps 2 , semblable à celui de 15a.

Le corps de pédale 2 est prolongé vers l'avant, à un niveau inférieur au plateau 4, par une lame centrale 21 de largeur inférieure à la largeur L de la pédale. La distance entre la face supérieure de la lame 21 et le plan supérieur du plateau 4 est désignée par f (Fig.2). La lame 21 est munie à son extrémité avant d'un rebord 22 en saillie vers le haut, formant un retour 23 vers l'arrière. Le bord arrière du retour 23 a une forme concave tournée vers l'arrière. L'espace 24 compris entre la lame 21 et le retour 23 constitue un logement permettant de recevoir un organe de butée facilitant le positionnement de la chaussure sur la pédale pour l'accrochage.

La cale C prévue pour être fixée sous une semelle S (Fig.5) de chaussure cycliste est bien visible sur Figs.7 et 8. La cale C est solidaire d'une platine 25 et fait saillie sous la face inférieure de cette platine, perpendiculairement à la platine. La cale C est métallique, notamment réalisée en un alliage cupro-aluminium. La platine 25 peut être constituée d'une plaque de tôle à laquelle la cale C est fixée, notamment par des rivets ou des vis traversant des trous t (Figs. 10, 11) dans la cale C. La platine 25 est prévue pour recouvrir le corps de pédale, y compris l'appui arrière 15, et pour s'étendre jusqu'au voisinage du retour 23. La platine 25 est suffisamment rigide pour transmettre, sans flexion sensible, la poussée du pied, exercée au-dessus de l'axe 3, à la pédale. La platine 25 appuie contre la pédale en avant de l'axe 3, et en arrière sur le pavé 15.

La cale C présente une surface frontale 26 (Fig.6 et 7) sensiblement plane, conjuguée du moyen de butée 9 ou 9a de la pédale. La surface 26 est constituée par une paroi, perpendiculaire à la platine 25, et sensiblement parallèle à l'axe géométrique A lorsque l'accrochage est réalisé. La paroi 26 peut glisser contre le moyen de butée frontale 9, 9a, sans accrochage, suivant une direction perpendiculaire au plateau 4. La paroi 26 peut aussi glisser suivant une direction parallèle à l'axe A . La surface 26 est prolongée latéralement par des surfaces 27, 28 inclinées vers l'arrière et formant un angle obtus avec la surface 26. La dimension maximale K (Fig.6) de la cale C, parallèlement à l'axe A, est inférieure à la dimension B de l'échancrure 7 et de la paroi 9. La différence entre les valeurs B et K est choisie de manière à assurer l'amplitude souhaitée pour la liberté latérale de la cale C et du pied sur la pédale.

La cale C présente, en saillie vers l'arrière, un bec 29,propre à s'accrocher sous le bord avant de l'organe de maintien 10 de la pédale. Le bec 29 est écarté vers le bas de la face supérieure de la cale C pour déterminer une rainure 30 dans laquelle peut venir se loger le bord avant de l'organe 10. Le fond de la rainure 30 est parallèle à la surface 26. L'épaisseur n (Fig.7) entre le fond de la rainure 30 et. la paroi 26 est supérieure à la distance h sur la pédale au repos. De ce fait, en position normale d'accrochage, la surface frontale 26 est en butée contre la paroi 9 tandis que le bord avant de l'organe 10 est en butée contre le fond de la rainure 30.

Le bord inférieur de la paroi frontale 26 de la cale C est formé par un chanfrein 26a (Fig.7) en retrait vers l'arrière facilitant l'engagement de la cale C dans l'échancrure 7. Le bord inférieur du crochet 29 est formé par un chanfrein 29a incliné vers l'avant favorisant le recul du bord avant de l'organe 10 lors de l'accrochage.

Les bords latéraux 29b, 29c du bec sont inclinés par rapport à la face 26 en sens contraire des parois 27, 28. Le choix de l'angle d'inclinaison des bords 29b, 29c détermine l'angle de torsion qui provoque le décrochage ou "déchaussage".

La platine 25 est équipée de vis ou rivets, par exemple quatre vis 31 (Fig.8), deux vers l'avant, deux vers l'arrière, pour la fixation sous la semelle S de la chaussure. D'autres types de fixation sont possibles pour lesquels sont prévus trois trous oblongs 32 disposés en triangle dans la platine 25. Un surmoulage en matière plastique de la platine 25 est prévu avec des surépaisseurs 33a, 33b (Fig.8) sur les côtés, vers l'avant de la platine 25, tandis qu'une surépaisseur centrale 34 est prévue à l'arrière. Ces surépaisseurs 33, 34 permettent un bon appui de la platine 25 sur la plaque 20 du plateau 4 et sur le pavé arrière 15 au-dessus duquel vient se placer la surépaisseur 34.

A l'arrière, au voisinage de chacun de ses bords, la platine 25 est munie d'un crampon 35a, 35b, sensiblement en forme de prisme triangulaire dont les génératrices sont perpendiculaires à la platine 25: Les crampons 35a, 35b sont de préférence démontables de manière à pouvoir être changés. Les crampons 35a, 35b sont réalisés en matière plastique ou matière élastomère; ils font saillie sous la face inférieure de la platine 25 sur une distance m (Fig.7) supérieure à la saillie q de la cale C sous la platine 25.

Les crampons 35a, 35b sont disposés de manière à traverser le dégagement correspondant 16a ou 16b, lors d'une rotation de la platine 25 pour provoquer le déchaussage.

La platine 25 est munie, sous son extrémité avant, d'un organe de butée 36 faisant saillie vers l'avant et au-dessous de la platine pour s'engager sous le retour 23 de la pédale. La face inférieure de l'organe de butée 36 est muni d'un revêtement 37 de matière plastique ou élastomère. La saillie de la butée 36 avec le revêtement 37 sous la plaque 25 est telle qu'un plan P (Fig.7) s'appuyant contre les crampons arrière 35a, 35b et l'organe 36 reste à distance du bord inférieur de la cale C. Dans ces conditions, un cycliste équipé d'une chaussure munie d'une cale C avec platine 25 dispose, lorsqu'il marche, de trois points d'appui correspondant aux deux crampons arrière 35a, 35b et à l'organe avant 36, 37; il peut ainsi dérouler son pied sans que la cale C vienne en contact avec le sol.

Fig. 9 montre une variante déjà décrite pour l'essentiel. Les éléments jouant des rôles semblables à des éléments des Figs. 1 à 6 sont désignés par les mêmes références. On peut noter que le plateau 4 présente, en avant de l'axe 3, une dépression 4i permettant de réduire l' épaisseur du corps et la masse de la pédale.

Le corps de pédale avec son plateau 4, ses branches arrière 4e, 4f, son pavé 15 et sa lame 21 est de préférence réalisé monobloc, notamment en alliage léger, ou en résine thermoplastique.

Ceci étant, l'utilisation et le fonctionnement de l'ensemble de la pédale de bicyclette et de la cale d'accrochage sont les suivants.

On considère un cycliste équipé d'une chaussure dont la semelle S (Fig.5) est munie de la platine 25 avec cale C.

Pour le "chaussage", c'est à dire pour accrocher sa chaussure à la pédale 1, le cycliste présente la semelle S au-dessus de la pédale, avec la pointe du pied inclinée vers l'avant, de manière à engager l'organe de butée 36 sous le retour 23. La cale C se trouve alors sensiblement au-dessus de l'échancrure 7.

Le cycliste exerce une pression du pied sur la pédale ce qui provoque l'entrée de la cale C dans l'échancrure 7, entrée facilitée par la présence du chanfrein 26a . L'engagement de la cale C dans l'échancrure 7 s'effectue pratiquement sans recul perceptible par le cycliste. L'arrêt de la cale C vers l'avant est assuré par la coopération de la face frontale 26 de cette cale et du moyen de butée frontale 9 ou 9a de la pédale. L'organe 36 n'est pas en contact avec le rebord 22.

Lors de la descente de la cale C dans l'échancrure 7, le chanfrein arrière 29a repousse l'organe de maintien 10 vers l'arrière jusqu'à ce que le bord avant de l'organe 10 franchisse le bord supérieur du bec 29 et entre dans la rainure 30. L'organe 10, sollicité par le ressort 13, revient vers l'avant et son bord avant s'applique contre le fond de la rainure 30. Les crampons 35a, 35b se trouvent dans les dégagements 16a, 16b, ou dans leur voisinage.

La partie arrière de la platine 25 est au contact de la zone d'appui arrière 15, 15a .La partie avant de la platine 25 est en appui sur la plaque 20 maintenue par la ou les vis 19.

La chaussure est accrochée à la pédale dans des conditions optimales. En effet, la cale C est logée dans l'échancrure 7 à un niveau inférieur à celui du plateau 4 de sorte que la semelle S appuie sur le plateau 4 à une faible distance de l'axe géométrique A de la pédale, ce qui assure de bonnes conditions de pédalage.

En outre le cycliste bénéficie d'une liberté angulaire et d'une liberté latérale pour la position de son pied sur la pédale.

Le recul possible de la cale C et de la chaussure, à l'encontre de l'effort exercé par le ressort 13 sur l'organe 10, est limité par la venue en appui de l'arrière de l'organe 36 contre la saillie 6, sans qu'il y ait décrochage.

Fig. 10 représente schématiquement et partiellement, en plan, la position "chaussée". La cale C est accrochée à une pédale droite, c'est à dire que la manivelle (non représentée) sur laquelle serait fixée la pédale se trouverait à gauche de la cale C sur Figs. 10 et 11.

Le décrochage, ou "déchaussage", est obtenu par un mouvement de torsion du pied qui provoque une rotation de la platine 25 et de la cale C relativement à la pédale 1. Généralement ce mouvement de torsion s'effectue en déplaçant le talon du pied vers l'extérieur, mais un mouvement de torsion en sens inverse peut également provoquer le décrochage.

Le schéma de Fig.11 illustre le décrochage. Le mouvement de torsion du pied vers l'extérieur a fait tourner la cale C . Le centre de rotation de la cale et de la chaussure est situé contre le moyen de butée frontale 9a, ou 9, en arrière de l'axe géométrique A de la pédale. La partie haute de la cale serrée entre le moyen de butée frontale 9a, ou 9, et le bord avant parallèle de l'organe 10, agit comme une came à contour sensiblement rectangulaire, dont la grande dimension est parallèle à l'axe A. La rotation de C provoque le recul de l'organe de maintien,10 jusqu'à l'angle de décrochage pour lequel le bord arrière 29b s'échappe du bord avant de l'organe de maintien 10. La chaussure est alors libérée de la pédale.

Lors de cette rotation, les crampons 35a, 35b traversent le dégagement correspondant 16a, 16b.

Lorsque la chaussure est accrochée et que le cycliste exerce un effort de traction sur la pédale, l'appui arrière 15, 15a au contact de la platine 25 empêche toute rotation relative de la pédale susceptible de provoquer un décrochage.

Le cycliste peut marcher en prenant appui sur le sol par les crampons 35a, 35b et l'organe avant 36, 37, sans contact de la cale C avec le sol.

## Revendications

1. Ensemble d'une pédale de bicyclette (1) à fixation de sécurité et d'une cale d'accrochage (C), la pédale comprenant un corps (2) monté rotatif sur un axe (3) et, sur au moins une face du corps :
- un plateau (4) au-dessus de l'axe de la pédale ;
- un moyen de butée frontale (9,9a) s'étendant parallèlement à l'axe géométrique (A) de la pédale et situé en arrière de cet axe, propre à coopérer avec une surface de butée frontale (26) de la cale, avec une liberté latérale ;
- un organe de maintien (10) monté mobile sur la pédale, propre à être appliqué par un moyen de rappel élastique (13) contre l'arrière de la cale,
- et un moyen de retenue vers le haut prévu sur la pédale pour coopérer avec un moyen conjugué de la cale,
l'accrochage de la cale à la pédale pouvant s'obtenir par une pression du pied sur le plateau de la pédale, tandis que le décrochage est obtenu par une rotation du pied relativement à la pédale autour d'un point situé en arrière de l'axe géométrique (A) de la pédale, ,
**caractérisé par le fait que**:
- le moyen de butée frontale (9, 9a) de la pédale et la surface de butée frontale (26) de la cale sont agencés pour pouvoir glisser l'un contre l'autre suivant une direction perpendiculaire au plateau (4) de la pédale sans accrochage, en particulier vers le haut,
- l'organe de maintien arrière (10) constitue le moyen de retenue vers le haut et est prévu pour accrocher un élément conjugué (29) de la cale ,
- et le corps de pédale (2) comporte, à l'arrière de l'organe de maintien arrière (10), une zone d'appui (15), pour une semelle de chaussure équipée de la cale.

2. Ensemble selon la revendication 1, **caractérisé par le fait que** la pédale (1) comporte, en arrière de son axe géométrique (A), et en arrière du plateau (4), un dégagement (16a, 16b) de chaque côté.

3. Ensemble selon la revendication 2, **caractérisé par le fait que** le corps de pédale (2) comporte, en arrière du plateau (4), une branche de prolongement (4e, 4f) de chaque côté, ayant une hauteur inférieure à celle du corps, et dont la face inférieure est sensiblement au niveau de la partie la plus basse du corps (2), les branches (4e, 4f) convergeant vers l'arrière pour se rejoindre et former la zone d'appui arrière (15), les dégagements (16a, 16b) étant situés au-dessus des branches (4e, 4f).

4. Ensemble selon la revendication 2 ou 3, **caractérisé par le fait que** la zone d'appui arrière (15) est constituée par un pavé central de largeur maximale (Z) inférieure à la largeur (L) de la pédale.

5. Ensemble selon la revendication 4, **caractérisé par le fait que** la largeur (Z) de la zone d'appui arrière (15) est inférieure ou égale à la moitié de la largeur (L) de la pédale (Z ≤ L/2).

6. Ensemble selon l'une des revendications 2 à 5, **caractérisé par le fait que** la zone d'appui arrière (15) est recouverte d'une plaque (15a) en métal plus dur que celui du corps (2) de pédale.

7. Ensemble selon l'une quelconque des revendications précédentes , **caractérisé par le fait que** la zone d'appui arrière (15) est située au niveau du plateau (4) .

8. Ensemble selon l'une des revendications 2 à 6, **caractérisé par le fait que** la cale (C) est solidaire en partie haute d'une platine (25) propre à recouvrir sensiblement toute la pédale, cette platine étant munie vers l'arrière, de chaque côté, d'un crampon (35a, 35b), en particulier en matière plastique ou élastomère, chaque crampon pouvant traverser un dégagement correspondant (16a, 16b) du corps (2) de pédale lors du mouvement de rotation pour le déchaussage.

9. Ensemble selon la revendication 8, **caractérisé par le fait qu'**un organe de butée (36) , en saillie vers le bas et vers l'avant, est fixé sous la platine (25), à l'avant .

10. Ensemble selon la revendication 9, **caractérisé par le fait que** l'organe de butée (36) comporte, sous sa face inférieure, un revêtement (37) de matière plastique ou élastomère.

11. Ensemble selon la revendication 9 ou 10, **caractérisé par le fait que** les deux crampons arrière (35a , 35b) et l'organe de butée avant (36) ont des hauteurs suffisantes pour former trois points d'appui sur le sol et maintenir la cale (C) hors de contact avec le sol lorsqu'un cycliste marche avec une chaussure munie de la cale avec platine

12. Ensemble selon l'une des revendications précédentes , **caractérisé par le fait que** l'organe de maintien arrière (10) est constitué par une pièce à section transversale en forme de dièdre (10a, 10b) dont la concavité est tournée vers l'avant et dont une face (10a) forme un crochet, cette pièce étant montée rotative sur une tige (11) parallèle à l'axe de la pédale et étant sollicitée élastiquement en rotation vers l'avant.

13. Ensemble selon l'une des revendications 1 à 11, **caractérisé par le fait que** l'organe de maintien arrière (10) comprend une barrette (10a') formant un crochet, cette barrette (10a') étant montée rotative sur une tige (11) parallèle à l'axe de la pédale et étant sollicitée élastiquement en rotation vers l'avant.

14. Ensemble selon la revendication 12 ou 13, **caractérisé par le fait que** l'organe de maintien (10) est sollicité par un ressort de torsion (13) monté autour de la tige (11) servant d'axe de rotation pour l'organe (10).

15. Ensemble selon l'une des revendications 12 à 14, **caractérisé par le fait que** l'organe de maintien (10) présente un bord avant rectiligne parallèle à l'axe de la pédale.

16. Ensemble selon l'une des revendications précédentes , **caractérisé par le fait que** l'élément conjugué de la cale (C), prévu pour coopérer avec l'organe de maintien (10) est formé par un bec (29) en saillie vers l'arrière , à la partie inférieure de la cale .

17. Ensemble selon l'une des revendications précédentes, **caractérisé par le fait que** le moyen de butée frontale de la pédale comprend une paroi (9) perpendiculaire au plateau (4) et limitant vers l'avant une échancrure arrière (7) du plateau.

18. Ensemble selon la revendication 17, **caractérisé par le fait que** la paroi (9) est formée par une plaque rapportée en métal plus dur que celui du corps de pédale (2).

19. Ensemble selon la revendication 17, **caractérisé par le fait que** le moyen de butée frontale de la pédale comprend un fil (9a) en métal plus dur que celui du corps de pédale (2) , parallèle à l'axe de la pédale, encastré dans la paroi (9) de manière à affleurer cette paroi.

20. Ensemble selon l'une des revendications précédentes, **caractérisé par le fait que** le plateau (4) de la pédale est prolongé vers l'avant, à un niveau inférieur à son plan supérieur, par une lame centrale (21) de largeur inférieure à celle de la pédale, cette lame étant munie à son extrémité avant d'un rebord (22) avec retour(23) vers l'arrière.

21. Ensemble selon l'une des revendications précédentes, **caractérisé par le fait que** le plateau (4) comporte au milieu de son bord avant une saillie longitudinale (6).

22. Pédale de bicyclette à fixation de sécurité comprenant un corps (2) monté rotatif sur un axe (3) et, sur au moins une face du corps :
- un plateau (4) au-dessus de l'axe de la pédale ;
- un moyen de butée frontale (9,9a) s'étendant parallèlement à l'axe géométrique (A) de la pédale et situé en arrière de cet axe, propre à coopérer avec une surface de butée frontale d'une cale, avec une liberté latérale ;
- un organe de maintien (10) monté mobile sur la pédale, propre à être appliqué par un moyen de rappel élastique (13) contre l'arrière de la cale,
- et un moyen de retenue vers le haut prévu sur la pédale pour coopérer avec un moyen conjugué de la cale,
l'accrochage de la cale à la pédale pouvant s'obtenir par une pression du pied sur le plateau de la pédale, tandis que le décrochage est obtenu par une rotation du pied relativement à la pédale autour d'un point situé en arrière de l'axe géométrique (A) de la pédale,
**caractérisée par le fait que**:
- le moyen de butée frontale (9, 9a) de la pédale et la surface de butée frontale de la cale sont agencés pour pouvoir glisser l'un contre l'autre suivant une direction perpendiculaire au plateau (4) de la pédale sans accrochage, en particulier vers le haut,
- l'organe de maintien arrière (10) constitue le moyen de retenue vers le haut et est prévu pour accrocher un élément conjugué (29) de la cale ,
- et le corps de pédale (2) comporte, à l'arrière de l'organe de maintien arrière (10), une zone d'appui (15), pour une semelle de chaussure équipée de la cale.

23. Pédale de bicyclette selon la revendication 22, **caractérisée par le fait que** le corps de pédale (2) comporte, en arrière du plateau (4), une branche de prolongement (4e, 4f) de chaque côté, ayant une hauteur inférieure à celle du corps, et dont la face inférieure est sensiblement au niveau de la partie la plus basse du corps (2), les branches (4e, 4f) convergeant vers l'arrière pour se rejoindre et former la zone d'appui arrière (15), les dégagements (16a, 16b) étant situés au-dessus des branches (4e, 4f).

## Claims

1. An assembly of a bicycle pedal (1) with a safety binding and a cleat (C), the pedal comprising a body (2) mounted to rotate on a spindle (3) and, on at least one face of the body:
- a plateau (4) above the spindle of the pedal;
- a frontal stop means (9, 9a) stretching parallel to the geometric axis (A) of the pedal and situated to the rear of this axis, able to collaborate with a frontal stop surface (26) of the cleat, with lateral freedom;
- a holding means (10) mounted to move on the pedal, able to be applied by an elastic return means (13) against the rear of the cleat,
- and an upward retaining means provided on the pedal to collaborate with a mating means on the cleat, it being possible for the cleat to be clipped into the pedal by foot pressure on the plateau of the pedal, while unclipping is obtained by twisting the foot relative to the pedal about a point situated behind the geometric axis (A) of the pedal,
**characterized in that**:
- the frontal stop means (9, 9a) of the pedal and the frontal stop surface (26) of the cleat are designed to be able to slide one over the other in a direction perpendicular to the plateau (4) of the pedal without catching, particularly upward,
- the rear holding member (10) constitutes the upward retaining means and is designed to catch on a mating element (29) of the cleat,
- and the pedal body (2) comprises, behind the rear holding member (10), a bearing region (15) for the sole of a shoe equipped with the cleat.

2. The assembly as claimed in claim 1, **characterized in that** the pedal (1) comprises, behind its geometric axis (A), and behind the plateau (4), a recess (16a, 16b) on each side.

3. The assembly as claimed in claim 2, **characterized in that** the pedal body (2) comprises, behind the plateau (4) an extending branch (4e, 4f) on each side, having a height shorter than that of the body, and the underside of which is roughly level with the lowermost part of the body (2), the branches (4e, 4f) converging toward the rear to meet and form the rear bearing region (15) the recesses (16a; 16b) being situated above the branches (4e, 4f).

4. The assembly as claimed in claim 2 or 3, **characterized in that** the rear bearing region (15) consists of a central block of maximum width (Z) less than the width (L) of the pedal.

5. The assembly as claimed in claim 4, **characterized in that** the width (Z) of the rear bearing region (15) is less than or equal to half the width (L) of the pedal (Z ≤ L/2).

6. The assembly as claimed in one of claims 2 to 5, **characterized in that** the rear bearing region (15) is covered with a plate (15a) made of a metal harder than that of the pedal body (2).

7. The assembly as claimed in any one of the preceding claims, **characterized in that** the rear bearing region (15) is situated at the level of the plateau (4).

8. The assembly as claimed in one of claims 2 to 6, **characterized in that** the cleat (C) is secured at the upper part to a mounting plate (25) able to take practically the entire pedal, this mounting plate being equipped, toward the rear, on each side, with a crampon (35a, 35b), particularly one made of plastic or elastomeric material, each crampon being able to pass through a corresponding recess (16a, 16b) of the pedal body (2) during a twisting movement for release.

9. The assembly as claimed in claim 8, **characterized in that** a stop member (36), projecting downward and forward, is fixed under the mounting plate (25), at the front.

10. The assembly as claimed in claim 9, **characterized in that** the stop member (36) comprises, under its underside, a coating (37) of plastic or elastomeric material.

11. The assembly as claimed in claim 9 or 10, **characterized in that** the two rear crampons (35a, 35b) and the front stop member (36) are tall enough to form three point contact on the ground and keep the cleat (C) out of contact with the ground when a cyclist is walking in a shoe equipped with the cleat and mounting plate.

12. The assembly as claimed in one of the preceding claims, **characterized in that** the rear holding member (10) consists of a piece with a dihedral-shaped cross section (10a, 10b), the concave side of which faces forward and one face (10a) of which forms a hook, this piece being mounted to rotate on a rod (11) parallel to the axis of the pedal and urged elastically to rotate forward.

13. The assembly as claimed in one of claims 1 to 11, **characterized in that** the rear holding member (10) comprises a strip (10a') forming a hook, this strip (10a') being mounted to rotate on a rod (11) parallel to the axis of the pedal and urged elastically to rotate forward.

14. The assembly as claimed in claim 12 or 13, **characterized in that** the holding member (10) is urged by a torsion spring (13) mounted about the rod (11) acting as the rotation spindle for the member (10).

15. The assembly as claimed in one of claims 12 to 14, **characterized in that** the holding member (10) has a straight front edge parallel to the axis of the pedal.

16. The assembly as claimed in one of the preceding claims, **characterized in that** the mating element of the cleat (C), designed to collaborate with the holding member (10), is formed of a backwardly protruding spur (29) at the lower part of the cleat.

17. The assembly as claimed in one of the preceding claims, **characterized in that** the frontal stop means of the pedal comprises a wall (9) perpendicular to the plateau (4) and toward the front bounding a rear cut-out (7) of the plateau.

18. The assembly as claimed in claim 17, **characterized in that** the wall (9) is formed of an attached plate made of a metal harder than that of the pedal body (2).

19. The assembly as claimed in claim 17, **characterized in that** the frontal stop means of the pedal comprises a wire (9a) made of a metal harder than that of the pedal body (2), parallel to the axis of the pedal, set into the wall (9) so that it is flush with this wall.

20. The assembly as claimed in one of the preceding claims, **characterized in that** the plateau (4) of the pedal is extended forward, at a level lower than its upper plane, by a central blade (21) of a width narrower than that of the pedal, this blade being equipped at its front end with a rim (22) with a rearward return (23).

21. The assembly as claimed in one of the preceding claims, **characterized in that** the plateau (4) has, in the middle of its front edge, a longitudinal protrusion (6).

22. A bicycle pedal with safety binding comprising a body (2) mounted to rotate on a spindle (3) and, on at least one face of the body:
- a plateau (4) above the spindle of the pedal;
- a frontal stop means (9, 9a) stretching parallel to the geometric axis (A) of the pedal and situated to the rear of this axis, able to collaborate with a frontal stop surface (26) of a cleat, with lateral freedom;
- a holding means (10) mounted to move on the pedal, able to be applied by an elastic return means (13) against the rear of the cleat,
- and an upward retaining means provided on the pedal to collaborate with a mating means on the cleat, it being possible for the cleat to be clipped in the pedal by foot pressure on the plateau of the pedal, while unclipping is obtained by twisting the foot relative to the pedal about a point situated behind the geometric axis (A) of the pedal,
**characterized in that**:
- the frontal stop means (9, 9a) of the pedal and the frontal stop surface of the cleat are designed to be able to slide one over the other in a direction perpendicular to the plateau (4) of the pedal without catching, particularly upward,
- the rear holding member (10) constitutes the upward retaining means and is designed to catch on a mating element (29) of the cleat,
- and the pedal body (2) comprises, behind the rear holding member (10), a bearing region (15) for the sole of a shoe equipped with the cleat.

23. The bicycle pedal as claimed in claim 22, **characterized in that** the pedal body (2) comprises, behind the plateau (4) an extending branch (4e, 4f) on each side, having a height shorter than that of the body, and the underside of which is roughly level with the lowermost part of the body (2), the branches (4e, 4f) converging_toward the rear to meet and form the rear bearing region (15), the recesses (16a, 16b) being situated above the branches (4e, 4f).

## Patentansprüche

1. Anordnung aus einem Fahrradpedal mit Sicherheitsbefestigung und einem Einhakkeil (C), wobei das Pedal einen drehbar auf einer Achse (3) angebrachten Körper (2) hat und auf mindestens einer Seite des Körpers aufweist:
eine Platte (4) über der Pedalachse;
eine vordere Anschlageinrichtung (9, 9a), die sich parallel zur Geometrieachse (A) des Pedals erstreckt und sich hinter dieser Achse befindet, und welche in der Lage ist, mit einer vorderen Anschlagfläche (26) des Keils mit einem seitlichen Spiel zusammenzuwirken;
ein bewegbar an dem Pedal befestigten Halteelement (10), das geeignet ist, von einer elastischen Rückstelleinrichtung (13) gegen die Rückseite des Keils gedrückt zu werden,
und ein an dem Pedal vorgesehenes Rückhaltemittel nach oben, das zum Zusammenwirken mit einer vorspringenden Einrichtung des Keils geeignet ist,
wobei das Einhaken des Keils in das Pedal durch einen Druck des Fußes auf die Platte des Pedals erfolgen kann, während das Aushaken erfolgt, indem der Fuß in bezug auf das Pedal um einen hinter der Geometrieachse (A) des Pedals liegenden Punkt gedreht wird,
**dadurch gekennzeichnet, dass**
die vordere Anschlageinrichtung (9, 9a) des Pedals und die vordere Anschlagfläche (26) des Keils derart ausgebildet sind, dass sie in einer zur Platte (4) des Pedals senkrechten Richtung, insbesondere nach oben, ohne Einhaken aneinander gleiten können,
das hintere Halteelement (10) das Rückhaltemittel nach oben bildet und zum Einhaken eines vorspringenden Elements (29) des Keils vorgesehen ist,
und der Pedalkörper (2) hinter dem hinteren Halteelement (10) eine Stützzone (15) für eine mit dem Keil versehene Schuhsohle aufweist.

2. Anordnung nach Anspruch 1, **dadurch gekennzeichnet, dass** das Pedal (1) hinter seiner Geometrieachse (A) und hinter der Platte (4) auf jeder Seite eine Ausnehmung (16a, 16b) aufweist.

3. Anordnung nach Anspruch 2, **dadurch gekennzeichnet, dass** der Pedalkörper (2) hinter der Platte (4) auf jeder Seite einen Verlängerungsbügel (4e, 4f) aufweist, die eine geringere Höhe als der Körper haben und deren Unterseite im wesentlichen auf der Höhe des tiefsten Bereichs des Körpers (2) liegt, wobei die Bügel (4e, 4f) nach hinten zusammenlaufen, um sich zu verbinden und die hintere Stützzone (15) zu bilden, wobei die Ausnehmungen (16a, 16b) über den Bügeln (4e, 4f) angeordnet sind.

4. Anordnung nach Anspruch 2 oder 3, **dadurch gekennzeichnet, dass** die hintere Stützzone (15) durch einen zentralen Block gebildet ist, dessen maximale Breite (Z) geringer als die Breite (L) des Pedals ist.

5. Anordnung nach Anspruch 4, **dadurch gekennzeichnet, dass** die Breite (Z) der hinteren Stützzone (15) kleiner oder gleich der Hälfte der Breite (L) des Pedals ist (Z ≤ L/2).

6. Anordnung nach einem der Ansprüche 2 bis 5, **dadurch gekennzeichnet, dass** die hintere Stützzone (15) von einer Platte (15a) aus einem Metall bedeckt ist, das härter als das des Pedalkörpers (2) ist.

7. Anordnung nach einem der vorhergehenden Ansprüche, **dadurch gekennzeichnet, dass** die hintere Stützzone (15) auf der Höhe der Platte (4) angeordnet ist.

8. Anordnung nach einem der Ansprüche 2 bis 6, **dadurch gekennzeichnet, dass** der Keil (C) im oberen Teil fest mit einer Platte (25) verbunden ist, welche geeignet ist, im wesentlichen das gesamte Pedal zu bedecken, wobei die Platte am hinteren Ende auf beiden Seiten mit einem Stollen (35a, 35b), insbesondere aus Kunststoff oder Elastomer, versehen ist, wobei jeder Stollen (35a, 35b) bei der zum Lösen erforderlichen Drehbewegung eine entsprechende Ausnehmung (16a, 16b) des Pedalkörpers (2) durchqueren kann.

9. Anordnung nach Anspruch 8, **dadurch gekennzeichnet, dass** ein nach unten und nach vorn vorspringendes Anschlagelement (36) am vorderen Ende unter der Platte (25) angebracht ist.

10. Anordnung nach Anspruch 9, **dadurch gekennzeichnet, dass** das Anschlagelement (36) unter seiner Unterseite eine Beschichtung (37) aus Kunststoff oder Elastomer aufweist.

11. Anordnung nach Anspruch 9 oder 10, **dadurch gekennzeichnet, dass** die beiden hinteren Stollen (35a, 35b) und das vordere Anschlagelement (36) ausreichende Höhen aufweisen, um auf dem Boden drei Stützpunkte zu bilden und den Keil (C) außer Kontakt mit dem Boden zu halten, wenn ein Radfahrer mit einem mit dem Keil mit Platte versehenen Schuh läuft.

12. Anordnung nach einem der vorhergehenden Ansprüche, **dadurch gekennzeichnet, dass** das hintere Halteelement (10) durch ein Teil mit diederförmigem Querschnitt (10a, 10b) gebildet ist, dessen Konkavität nach vorn gerichtet und dessen eine Fläche (10a) einen Haken bildet, wobei dieses Teil drehbar an einer Stange (11) angebracht ist, welche parallel zu der Achse des Pedals verläuft, und elastisch unter Drehung nach vorn vorgespannt ist.

13. Anordnung nach einem der Ansprüche 1 bis 11, **dadurch gekennzeichnet, dass** das hintere Halteelement (10) eine Leiste (10a') aufweist, welche einen Haken bildet, wobei die Leiste (10a') drehbar an einer Stange (11) angebracht ist, welche parallel zu der Achse des Pedals verläuft, und elastisch unter Drehung nach vorn vorgespannt ist.

14. Anordnung nach Anspruch 12 oder 13, **dadurch gekennzeichnet, dass** das Halteelement (10) durch eine Torsionsfeder (13) vorgespannt ist, die um die als Drehachse des Elements (10) dienende Stange (11) herum montiert ist.

15. Anordnung nach einem der Ansprüche 12 bis 14, **dadurch gekennzeichnet, dass** das Halteelement (10) einen geraden vorderen Rand aufweist, der parallel zur Achse des Pedals verläuft.

16. Anordnung nach einem der vorhergehenden Ansprüche, **dadurch gekennzeichnet, dass** das vorspringende Element des Keils (C), das zum Zusammenwirken mit dem Haltelement (10) vorgesehen ist, durch eine nach hinten vorstehende Nase (29) am unteren Teil des Keils gebildet ist.

17. Anordnung nach einem der vorhergehenden Ansprüche, **dadurch gekennzeichnet, dass**die vordere Anschlageinrichtung des Pedals eine zur Platte (4) senkrecht verlaufende Wand (9) aufweist, welche einen hinteren Ausschnitt (7) der Platte nach vorn begrenzt.

18. Anordnung nach Anspruch 17, **dadurch gekennzeichnet, dass** die Wand (9) durch eine angesetzte Platte aus einem Metall gebildet ist, das härter als das des Pedalkörpers (2) ist.

19. Anordnung nach Anspruch 17, **dadurch gekennzeichnet, dass** die vordere Anschlageinrichtung des Pedals einen parallel zur Pedalachse verlaufenden Draht (9a) aus einem Metall aufweist, das härter als das des Pedalkörpers (2) ist, wobei der Draht mit der Wand (9) fluchtend in diese eingesetzt ist.

20. Anordnung nach einem der vorhergehenden Ansprüche, **dadurch gekennzeichnet, dass** die Platte (4) des Pedals auf einer unter deren oberen Ebene liegenden Höhe nach vorn durch einen mittigen Steg (21) verlängert ist, dessen Breite geringer als die des Pedals ist, wobei der Steg an seinem vorderen Ende einen Rand (22) mit einem Rücksprung (23) aufweist.

21. Anordnung nach einem der vorhergehenden Ansprüche, **dadurch gekennzeichnet, dass** die Platte (4) in der Mitte ihres vorderen Randes einen längsgerichteten Vorsprung (6) aufweist.

22. Fahrradpedal mit Sicherheitsbefestigung mit einem drehbar auf einer Achse (3) angebrachten Körper (2) und auf mindestens einer Seite des Körpers aufweist:
eine Platte (4) über der Pedalachse;
eine vordere Anschlageinrichtung (9, 9a), die sich parallel zur Geometrieachse (A) des Pedals erstreckt und sich hinter dieser Achse befindet, und welche in der Lage ist, mit einer vorderen Anschlagfläche (26) eines Keils mit einem seitlichen Spiel zusammenzuwirken;
ein bewegbar an dem Pedal befestigten Halteelement (10), das geeignet ist, von einer elastischen Rückstelleinrichtung (13) gegen die Rückseite des Keils gedrückt zu werden,
und ein an dem Pedal vorgesehenes Rückhaltemittel nach oben, das zum Zusammenwirken mit einer vorspringenden Einrichtung des Keils geeignet ist,
wobei das Einhaken des Keils in das Pedal durch einen Druck des Fußes auf die Platte des Pedals erfolgen kann, während das Aushaken erfolgt, indem der Fuß in bezug auf das Pedal um einen hinter der Geometrieachse (A) des Pedals liegenden Punkt gedreht wird,
**dadurch gekennzeichnet, dass**
die vordere Anschlageinrichtung (9, 9a) des Pedals und die vordere Anschlagfläche des Keils derart ausgebildet sind, dass sie in einer zur Platte (4) des Pedals senkrechten Richtung, insbesondere nach oben, ohne Einhaken aneinander gleiten können,
das hintere Halteelement (10) das Rückhaltemittel nach oben bildet und zum Einhaken eines vorspringenden Elements (29) des Keils vorgesehen ist,
und der Pedalkörper (2) hinter dem hinteren Halteelement (10) eine Stützzone (15) für eine mit dem Keil versehene Schuhsohle aufweist.

23. Fahrradpedal nach Anspruch 22, **dadurch gekennzeichnet, dass** der Pedalkörper (2) hinter der Platte (4) auf jeder Seite einen Verlängerungsbügel (4e, 4f) aufweist, die eine geringere Höhe als der Körper haben und deren Unterseite im wesentlichen auf der Höhe des tiefsten Bereichs des Körpers (2) liegt, wobei die Bügel (4e, 4f) nach hinten zusammenlaufen, um sich zu verbinden und die hintere Stützzone (15) zu bilden, wobei die Absätze (16a, 16b) über den Bügeln (4e, 4f) angeordnet sind.
